# EUROPEAN PATENT APPLICATION

(11) **EP 4 564 625 A2**
(43) Date of publication of application: **04.06.2025**
(21) Application number: 24307002.6
(22) Date of filing: 29.11.2024
(51) Int. Cl.: H02G 3/08, H02G 3/10, B60L 53/30, H02G 3/04

(54) **CHARGING PILE BASE**

(30) Priority: 30.11.2023 CN 202323264514 U
(71) Applicant: Schneider Electric Industries SAS, 92500 Rueil-Malmaison (FR)
(72) Inventor: NI, Junjie, Shanghai, 201203 (CN); RIVIERE, Lucas, 38050 Grenoble (FR); MA, Feng, Shanghai, 201203 (CN); LI, Hu, Shanghai, 201203 (CN); JIN, Chen, Shanghai, 201203 (CN)
(74) Representative: Manitz Finsterwald Patent- und Rechtsanwaltspartnerschaft mbB

(57) **Abstract**

The present disclosure provides a charging pile base adapted to be disposed on a carrier, the charging pile base comprises a bottom case comprising a first groove formed by recessing along a direction away from the carrier, a second groove formed by recessing along the direction away from the carrier, and a sealing hole located on a side of the first groove away from the ground for a cable to pass through, and the first groove being located at an end of the bottom case adjacent to the ground; and a side case surrounding a side of the bottom case away from the carrier and enclosing a mounting cavity together with the bottom case, wherein the first groove is communicated with the mounting cavity via the sealing hole, and the second groove extends from an end of the side case away from the ground towards the first groove and is communicated with the first groove.

## Description

### FIELD

Embodiments of the present disclosure generally relate to the technical field of electrical equipment, and more particularly, to a charging pile base.

### BACKGROUND

A base of a charging pile needs to be connected to a power line and a signal line to implement a charging function thereof. Due to difference of installation environments, there are also different wire feeding modes for the charging pile, such as a top feeding line, a bottom feeding line and a back feeding line.

In order to meet the different wire feeding modes, a conventional charging pile is usually provided with a plurality of sealing holes on the base; and in order to meet the dustproof and waterproof requirements of the charging pile, the conventional charging pile further needs to be provided with a sealing part within each hole, which leads to an excessive number of the sealing parts.

### SUMMARY

An object of the present disclosure is to provide a charging pile base to at least partially solve the above problems.

In a first aspect of the present disclosure, there is provided a charging pile base adapted to be disposed on a carrier. The charging pile base comprises a bottom case comprising a first groove formed by recessing along a direction away from the carrier, a second groove formed by recessing along the direction away from the carrier, and a sealing hole located on a side of the first groove away from the ground for a cable to pass through, and the first groove being located at an end of the bottom case adjacent to the ground; and a side case surrounding a side of the bottom case away from the carrier and enclosing a mounting cavity together with the bottom case, wherein the first groove is communicated with the mounting cavity via the sealing hole, and the second groove extends from an end of the side case away from the ground towards the first groove and is communicated with the first groove.

According to embodiments of the present disclosure, the first groove is communicated with the mounting cavity via the sealing hole. On the one hand, since the first groove is recessed along a direction away from the carrier, a cable from a back surface can be directly inserted into the mounting cavity via the first groove and the sealing hole. On the other hand, since the first groove is located at an end of the bottom case adjacent to the ground, a cable from a bottom can also be directly inserted into the mounting cavity via the first groove and the sealing hole. Finally, since the second groove extends from an end of the side case away from the ground towards the first groove, and the second groove is communicated with the first groove, a cable from a top can be inserted into the mounting cavity via the second groove, the first groove and the sealing hole. Therefore, the charging pile base according to the embodiments of the present disclosure does not need to be provided with a plurality of sealing holes to meet different wire feeding modes. In addition, since there is only one sealing hole, only one sealing part is required during a process of subsequent installation, thereby avoiding the problem of the excessive number of the sealing parts.

In some embodiments, an operating hole is disposed on a side of the bottom case away from the carrier, and the operating hole is communicated with the first groove.

In some embodiments, the second groove is disposed at a periphery of the bottom case and adjacent to the side case, and the first groove and the second groove are adjacent to two opposite sides of the side case, respectively.

In some embodiments, the charging pile base further comprises a wire pressing assembly located within the mounting cavity and adjacent to the sealing hole.

**In** some embodiments, the wire pressing assembly comprises a first wire pressing part disposed on the bottom case and a second wire pressing part connected to the first wire pressing part, and detachable elastic parts are disposed on surfaces of the first wire pressing part and the second wire pressing part facing each other, respectively.

In some embodiments, surfaces of a pair of elastic parts facing each other comprise arc surfaces, respectively, and a pair of arc surfaces are symmetrical to each other.

In some embodiments, the charging pile base further comprises a sealing part matched with the sealing hole and a cable passing through the sealing part, the sealing part is provided with a wiring hole matched with the cable, and wherein in a case that the cable is pressed by the wire pressing assembly, an axis of the cable coincides with an axis of the wiring hole.

In some embodiments, limit parts are disposed on surfaces of the pair of elastic parts away from each other, respectively, a first limit hole is disposed on the first wire pressing part, and a second limit hole is disposed on the second wire pressing part, wherein one of a pair of limit parts is disposed within the first limit hole, and the other one of the pair of limit parts is disposed within the second limit hole.

In some embodiments, the wire pressing assembly comprises a third wire pressing part disposed on the bottom case and a fourth wire pressing part connected to the third wire pressing part through an anti-falling bolt.

In some embodiments, the third wire pressing part is recessed along a direction away from the fourth wire pressing part and forms a wire pressing groove, the fourth wire pressing part extends along a direction towards the third wire pressing part and forms a wire pressing portion, and a projection of the wire pressing groove is connected to and staggered with a projection of the wire pressing portion along a direction from the third wire pressing part to the fourth wire pressing part.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 shows a schematic structural diagram of a charging pile base along a viewing angle according to some embodiments of the present disclosure;
FIG. 2 shows a schematic structural diagram of the charging pile base shown in FIG. 1 along another viewing angle;
FIG. 3 shows an installation schematic diagram of a charging pile base according to some embodiments of the present disclosure;
FIG. 4 shows an installation schematic diagram of the charging pile base shown in FIG. 3, where a cable is not shown;
FIG. 5 shows a schematic structural diagram of the wire pressing assembly shown in FIG. 3;
FIG. 6 shows an exploded view of the wire pressing assembly shown in FIG. 5;
FIG. 7 shows a schematic structural diagram of elastic parts of different specifications according to some embodiments of the present disclosure;
FIG. 8 shows an installation schematic diagram of a charging pile base according to another embodiment of the present disclosure;
FIG. 9 shows a schematic structural diagram of the wire pressing assembly shown in FIG. 8;
FIG. 10 shows an exploded view of the wire pressing assembly shown in FIG. 9.

### Description of reference signs:

100 represents a charging pile base, 101 represents a mounting cavity; 200 represents a carrier;
1 represents a bottom case, 11 represents a first groove, 12 represents a second groove, 13 represents a sealing hole, and 14 represents an operating hole;
2 represents a side case, and 21 represents a detachable portion;
3 represents a wire pressing assembly, 31 represents a first wire pressing part, 311 represents a first limit hole, 32 represents a second wire pressing part, 321 represents a second limit hole, 33 represents a third wire pressing part, 331 represents a wire pressing groove, 34 represents a fourth wire pressing part, 341 represents a wire pressing portion, 35 represents an elastic part, 351 represents an arc surface, 36 represents a limit part, and 37 represents an anti-falling bolt;
4 represents a sealing part, 41 represents a wiring hole; and 5 represents a cable.

### DETAILED DESCRIPTION

Preferred embodiments of the present disclosure will be described in more detail below with reference to the accompanying drawings. While the preferred embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "comprising" and variations thereof represent openness, i.e., "including but not limited to". Unless specifically stated, the term "or" means "and / or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

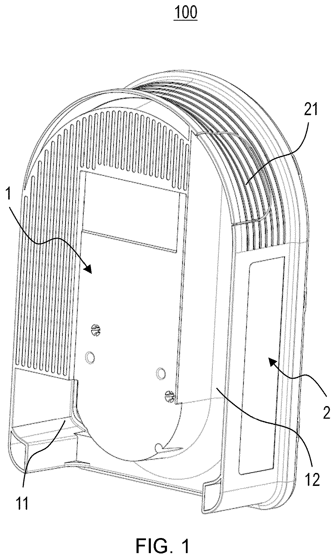

As described above, in order to meet different wire feeding modes, a conventional charging pile is usually provided with a plurality of sealing holes on the base, and in order to meet the dustproof and waterproof requirements of the charging pile, the conventional charging pile further needs to be provided with a sealing part within each hole, which leads to an excessive number of the sealing parts. Embodiments of the present disclosure provide a charging pile base 100 to at least partially solve the above problems. Hereinafter, the principles of the present disclosure will be described with reference to FIGS. 1 to 10.

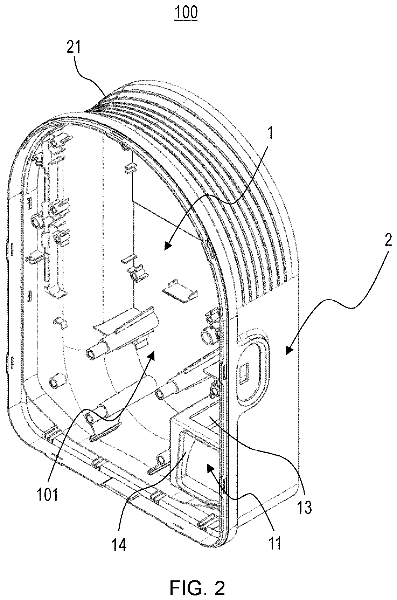

FIG. 1 shows a schematic structural diagram of a charging pile base along a viewing angle according to some embodiments of the present disclosure. FIG. 2 shows a schematic structural diagram of the charging pile base shown in FIG. 1 along another viewing angle. As shown in FIGS. 1 and 2, the charging pile described herein generally includes a charging pile base 100 and a cover plate (not shown) covering the charging pile base 100. The charging pile base 100 is mounted on the carrier 200, and a mounting cavity 101 is formed within the charging pile base 100, and electronic components such as a printed circuit board and an LED indicator light can be accommodated within the mounting cavity 101.

In some embodiments, the carrier 200 may include an outer wall of a building. In some other embodiments, the carrier 200 may further include a columnar structure. Apparently, the carrier 200 is not limited herein as long as it can achieve the function of fixing the charging pile.

With continued reference to FIGS. 1 and 2, in some embodiments, the charging pile base 100 includes a bottom case 1 and a side case 2. The bottom case 1 is disposed on the carrier 200. The side case 2 has a closed structure, and the side case 2 surrounds a side of the bottom case 1 away from the carrier 200 to enclose the mounting cavity 101 together with the bottom case 1.

In some embodiments, the bottom case 1 may be directly disposed on the carrier 200. In other embodiments, the bottom case 1 may also be disposed on the carrier 200 through a mounting plate. That is, the mounting plate is first fixed on the carrier 200, and then the bottom case 1 is fixed to the mounting plate. Mounting forms of the bottom case 1 and the carrier 200 are not limited herein.

Still referring to FIGS. 1 and 2, in some embodiments, the bottom case 1 is provided with a first groove 11 and a second groove 12. The first groove 11 is formed in the bottom case 1 by recessing along a direction away from the carrier 200, and the second groove 12 is also formed in the bottom case 1 by recessing along the direction away from the carrier 200. The first groove 11 is located at an end of the bottom case 1 adjacent to the ground, that is, the first groove 11 is located at a bottom of the bottom case 1. The bottom case 1 is further provided with a sealing hole 13. The first groove 11 is communicated with the mounting cavity 101 via the sealing hole 13. The sealing hole 13 is mainly used for the cable 5 to pass through the bottom case 1, and the cable 5 extends within the mounting cavity 101 after passing through the bottom case 1. The second groove 12 extends from an end of the side case 2 away from the ground towards the first groove 11, in other words, the second groove 12 extends from a top of the side case 2 towards the first groove 11, and the second groove 12 may be communicated with the first groove 11.

Further, the sealing part 4 is matched with the sealing hole 13 to achieve a protection performance of the charging pile through the sealing part 4. The sealing part 4 may also be provided with a wiring hole 41, and the wiring hole 41 may be matched with the cable 5, therefore the cable 5 may pass through the sealing part 4.

With continued reference to FIGS. 1 and 2, with the above configuration, on the one hand, since the first groove 11 is recessed along a direction away from the carrier 200, the cable 5 from a back surface can be directly inserted into the mounting cavity 101 via the first groove 11 and the sealing hole 13. On the other hand, since the first groove 11 is located at a bottom of the bottom case 1, the cable 5 from the bottom may also be directly inserted into the mounting cavity 101 via the first groove 11 and the sealing hole 13. Finally, since the second groove 12 extends from a top of the side case 2 towards the first groove 11, and the second groove 12 is in communicated with the first groove 11, the cable 5 from the top may be inserted into the mounting cavity 101 via the second groove 12, the first groove 11, and the sealing hole 13. Therefore, the charging pile base 100 according to the embodiments of the present disclosure does not need to be provided with a plurality of sealing holes 13 to meet different wire feeding modes. In addition, since there is only one sealing hole 13, only one sealing part 4 is required during a process of subsequent installation, thereby avoiding the problem of increasing cost due to excessive number of the sealing parts 4.

With continued reference to FIGS. 1 and 2, it can be understood that since the bottom case 1 contacts the carrier 200, the first groove 11 is located at the end of the bottom case 1 adjacent to the ground, and at the same time the first groove 11 is formed by recessing along a direction away from the carrier 200, Apparently, the first groove 11 is located inside the charging pile base 100. In addition, since the sealing hole 13 is located on a side of the first groove 11 away from the ground, and the sealing hole 13 is also located inside the charging pile base 100, the charging pile base 100 has better protection performance. Finally, since the first groove 11 is located at the end of the bottom case 1 adjacent to the ground, and at the same time the sealing hole 13 is located on the side of the first groove 11 away from the ground, it is difficult for fluids to enter the charging pile base 100 from bottom to top through the sealing hole 13, thereby further satisfying a IP protection requirement.

With continued reference to FIG. 2, in some embodiments, an operating hole 14 may be disposed on a side of the bottom case 1 away from the carrier 200, and the operating hole 14 is communicated with the first groove 11. Whereby, by providing the operating hole 14, during a process of installing the sealing part 4 and the cable 5 within the sealing hole 13, an operator can achieve the above operation through the operating hole 14.

Still referring to FIG. 2, in some embodiments, a side of the side case 2 away from the ground is provided with a detachable portion 21, that is, a top of the side case 2 is provided with the detachable portion 21. Whereby, in a case of top feeding line, the operator may remove the detachable portion 21, so that the cable 5 is inserted into the mounting cavity 101 via the second groove 12, the first groove 11, and the sealing hole 13.

Referring back to FIG. 1, in some embodiments, the second groove 12 may be disposed at a periphery of the bottom case 1, and the second groove 12 may be adjacent to the side case 2. Whereby, on the one hand, the influence of the second groove 12 on the capacity of the mounting cavity 101 can be reduced. On the other hand, the size of the second groove 12 can be appropriately increased to meet routing of the cables 5 with different thicknesses and different specifications.

Still referring to FIGS. 1 and 2, in some embodiments, the first groove 11 and the second groove 12 are located on a same side of the bottom case 1 adjacent to the carrier 200, and the first groove 11 is adjacent to a side of the side case 2, and the second groove 12 is adjacent to an opposite side of the side case 2. An end of the second groove 12 adjacent to the first groove 11 may include an arc groove, the arc groove is communicated with the first groove 11, and the arc groove is adjacent to the ground. The arc groove facilitates bending of the cable 5, thereby facilitating that the cable 5 transitions from the second groove 12 to the first groove 11 along a length direction of the bottom case 1. Whereby, the arc groove is disposed along the length direction of the bottom case 1, and the length of the bottom case 1 is increased, thereby facilitating a thinning design of the product.

In some other embodiments, the first groove 11 and the second groove 12 are located on the same side of the bottom case 1 adjacent to the carrier 200, and the second groove 12 is located above the first groove 11. The first groove 11 and the second groove 12 are adjacent to a same side of the side case 2, respectively. For example, the first groove 11 and the second groove 12 may be adjacent to the left side of the side case 2, respectively. Whereby, the cable 5 can transition from the second groove 12 to the first groove 11 along a thickness direction of the bottom case 1, but the thickness of the product can be increased in a case that a diameter of the cable 5 is large.

It should be noted that, in some embodiments, the first groove 11 and the second groove 12 may further be disposed at an intermediate position of the bottom case 1, and other arrangement positions of the first groove 11 and the second groove 12 are also possible, which is not limited herein.

Specifically, a wire pressing assembly 3 is disposed on the bottom case 1, and the wire pressing assembly 3 is located within the mounting cavity 101. The wire pressing assembly 3 may be adjacent to the sealing hole 13, so as to fix the cable 5 entering from the sealing hole 13 through the wire pressing assembly 3.

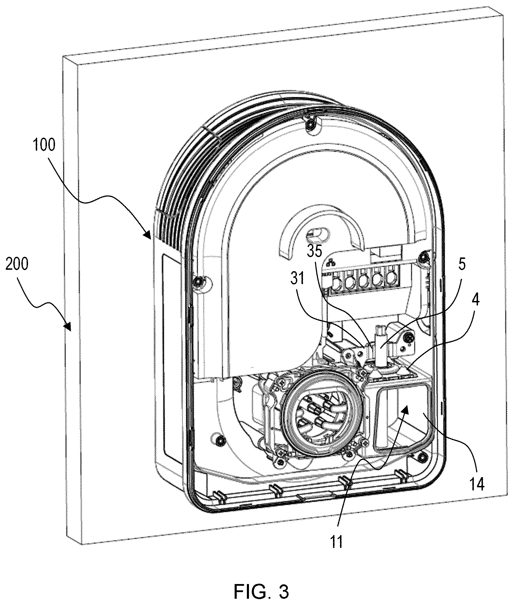

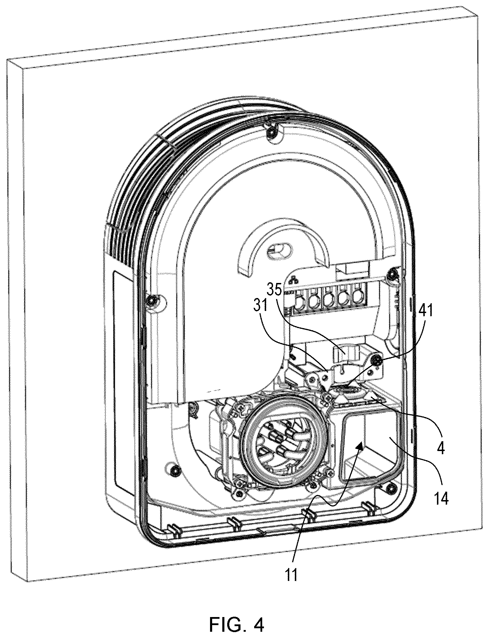

FIG. 3 shows an installation schematic diagram of a charging pile base according to some embodiments of the present disclosure. FIG. 4 shows an installation schematic diagram of the charging pile base shown in FIG. 3, where a cable is not shown. As shown in FIGS. 3 and 4, in some embodiments, the wire pressing assembly 3 may include a first wire pressing part 31 and a second wire pressing part 32. The first wire pressing part 31 is disposed on the bottom case 1, and the second wire pressing part 32 is connected to the first wire pressing part 31 and is spaced apart from the bottom case 1. A space formed by the first wire pressing part 31 and the second wire pressing part 32 can fix the cable 5. The cable 5 may be composed of a plurality of power lines, then a pipe is sleeved on the outer side of the plurality of power lines, and the plurality of power lines are limited by the pipe.

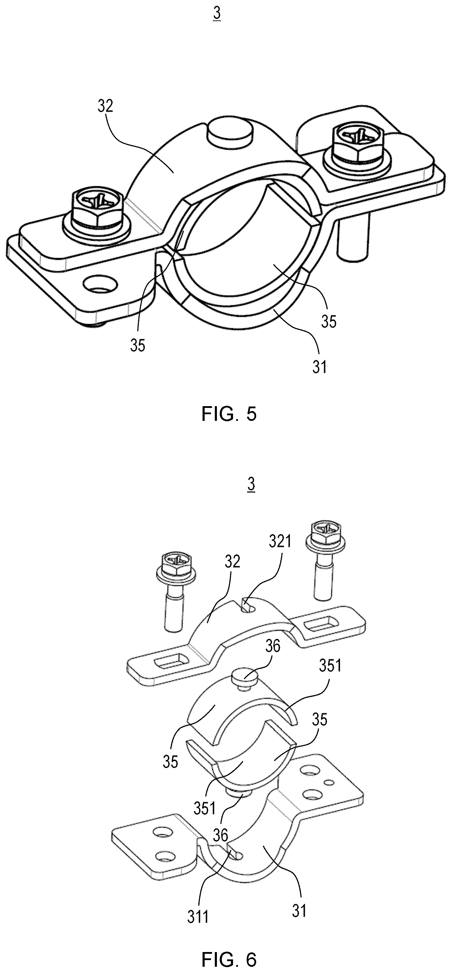

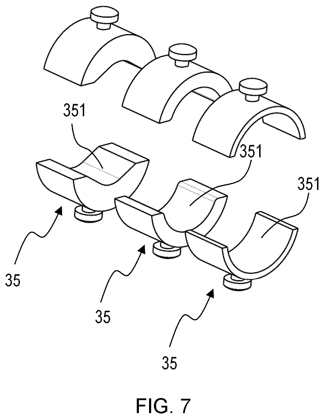

FIG. 5 shows a schematic structural diagram of the wire pressing assembly shown in FIG. 3. FIG. 6 shows an exploded view of the wire pressing assembly shown in FIG. 5. FIG. 7 shows a schematic structural diagram of elastic parts of different specifications according to some embodiments of the present disclosure. As shown in FIGS. 5 to 7, in some embodiments, elastic parts 35 are disposed on surfaces of the first wire pressing part 31 and the second wire pressing part 32 facing each other, respectively, and the elastic parts 35 can be disposed detachably. Whereby, according to the cables 5 with different specifications and different wire diameters, the elastic parts 35 of different specifications can be selected, so that the wire pressing assembly 3 meets fixing requirements of the cables 5 with different specifications and different wire diameters.

The elastic parts 35 according to the embodiment of the present disclosure may be elastic parts 35 of various types currently known or available in the future, which is not limited in the embodiments of the present disclosure. For example, in some embodiments, the elastic parts 35 may be rubber.

With continued reference to FIGS. 3 to 7, in some embodiments, surfaces of a pair of elastic parts 35 facing each other include arc surfaces 351, respectively, and the arc surfaces 351 are symmetrical to each other. Whereby, the arc surfaces 351 can be better matched with an outer side surface of the cable 5, so that the wire pressing assembly 3 can more securely clamp the cable 5. The structure of the arc surfaces 351 are also different according to different specifications and different wire diameters of the cable 5. For example, referring to FIG. 6, each arc surface 351 may include a segment of arc surface. Referring to the elastic part 35 on the left side in FIG. 7, the arc surface 351 of the elastic part 35 may further include two or more segments of arc surfaces with different diameters.

In such embodiments, referring to FIG. 5, ends of the elastic parts 35 adjacent to each other may be spaced apart, or the ends of the elastic parts 35 adjacent to each other may further be in contact.

Referring back to FIG. 3, in some embodiments, in a case that the cable 5 is pressed by the wire pressing assembly 3, an axis of the cable 5 may coincide with an axis of the wiring hole 41. With the above configuration, a condition that a center of the cable 5 is inconsistent with a center of the wiring hole 41 can be avoided, thereby avoiding affecting a protection performance due to the gap between the cable 5 and the wiring hole 41.

Still referring to FIG. 6, in some embodiments, limit parts 36 are disposed on surfaces of the pair of elastic parts 35 away from each other, respectively. A first limit hole 311 is disposed on the first wire pressing part 31, and a second limit hole 321 is disposed on the second wire pressing part 32. One of a pair of limit parts 36 is disposed within the first position-limit hole 311 to detachably connect the elastic part 35 to the first wire pressing part 31. The other one of the pair of limit parts 36 is disposed within the second limit hole 321 to detachably connect the elastic part 35 to the second wire pressing part 32.

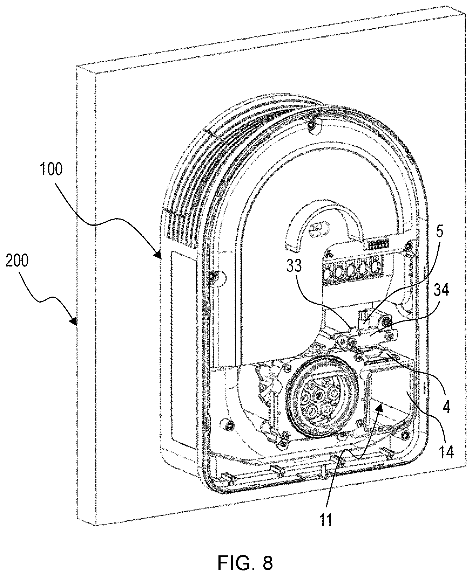

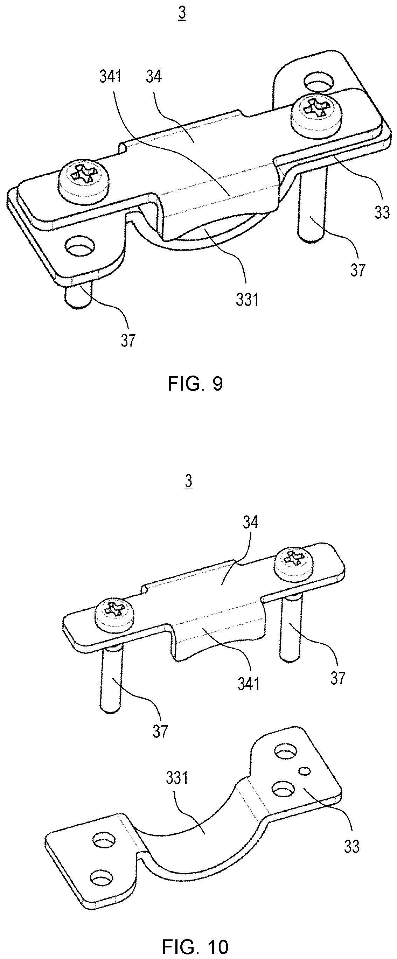

FIG. 8 shows an installation schematic diagram of a charging pile base according to another embodiment of the present disclosure. FIG. 9 shows a schematic structural diagram of the wire pressing assembly shown in FIG. 8. FIG. 10 shows an exploded view of the wire pressing assembly shown in FIG. 9. As shown in FIGS. 8 to 10, in some other embodiments, the wire pressing assembly 3 may further include a third wire pressing part 33 and a fourth wire pressing part 34. The third wire pressing part 33 is disposed on the bottom case 1, and the fourth wire pressing part 34 is connected to the third wire pressing part 33 and is spaced apart from the bottom case 1. A space formed by the third wire pressing part 33 and the fourth wire pressing part 34 can fix the cable 5. The third wire pressing part 33 and the fourth wire pressing part 34 may be connected through an anti-falling bolt 37.

With the above configuration, during a process of wiring, the third wire pressing part 33 and the fourth wire pressing part 34 are first fixed on the bottom case 1. The anti-falling bolt 37 is then loosened in advance, and the fourth wire pressing part 34 may move away from the third wire pressing part 33, so that the third wire pressing part 33 and the fourth wire pressing part 34 are spaced apart to reserve a space for arranging the cable 5 between the third wire pressing part 33 and the fourth wire pressing part 34. Then, the anti-falling bolt 37 is tightened in the reverse direction after the cable 5 passes through the space, so that the anti-falling bolt 37 is matched with a nut (not shown in the figure) on the bottom case 1, thereby realizing installation and fixing of the cable 5. Apparently, since the anti-falling bolt 37 does not fall off from the third wire pressing part 33 and the fourth wire pressing part 34, during a process of installation, it is not necessary to align holes on the fourth wire pressing part 34 and the third wire pressing part 33 by using a conventional bolt, and there is no further need to press the fourth wire pressing plate 34 with one hand and tighten the conventional bolt with the other hand, thereby simplifying the installation process and improving the installation efficiency; in addition, during a process of fixing the third wire pressing part 33 and the bottom case 1, the anti-falling bolt 37 does not fall off from the third wire pressing part 33 and the fourth wire pressing part 34, so that the anti-falling bolt 37 is prevented from falling inside the charging pile.

It should be noted that the anti-falling bolt 37 needs to be provided with a sufficient length to meet fixing requirements of the cable 5 with different wire diameters, thereby avoiding the problem that the wire pressing assembly 3 cannot fix the cable 5 with a larger wire diameters due to a short length of the anti-falling bolt 37 during a process of loosening the anti-falling bolt 37 in advance. Apparently, the longer the length of the anti-falling bolt 37 is, the larger is the wire diameter of the cable 5 that can be fixed.

The anti-falling bolt 37 according to the embodiment of the present disclosure may be anti-falling bolts 37 of various types currently known or available in the future, which is not limited in the embodiments of the present disclosure. For example, referring to FIGS. 9 and 10, in some embodiments, the anti-falling bolt 37 may include a rod body portion and a nut portion, and only an outer side surface of one end of the rod body away from the nut portion is provided with threads, and outer surfaces of other positions are not provided with threads. Therefore, with continued reference to FIGS. 9 and 10, if the anti-falling bolt 37 needs to be removed from the third wire pressing part 33 and the fourth wire pressing part 34, the rod body needs to be provided with an acting force towards the fourth wire pressing part 34, and a threaded rod body is located inside the third wire pressing part 33 through the acting force, so that the anti-falling bolt 37 can continue to be twisted outwards, and therefore the anti-falling bolt 37 falls off from the third wire pressing part 33. Apparently, if the rod body does not be provided with the acting force towards the fourth wire pressing part 34, even if the anti-falling bolt 37 is twisted, the anti-falling bolt 37 does not fall off from the third wire pressing part 33. Similarly, the anti-falling bolt 37 does not fall off from the fourth wire pressing part 34, and details are not described herein again.

Still referring to FIG. 9, in some embodiments, the third wire pressing part 33 is recessed along a direction away from the fourth wire pressing part 34 and forms a wire pressing groove 331. The fourth wire pressing part 34 extends along a direction towards the third wire pressing part 33 and forms a wire pressing portion 341. Along a direction from the third wire pressing part 33 to the fourth wire pressing part 34, a projection of the wire pressing groove 331 is connected to and staggered with a projection of the wire pressing portion 341. With the above configuration, since the projection of the wire pressing groove 331 is staggered with the projection of the wire pressing portion 341, during a process of wire pressing, it can avoid a condition where the fourth wire pressing part 34 cannot continue to move towards a direction close to the third wire pressing part 33 due to interference between the wire pressing portion 341 and the wire pressing groove 331, thereby facilitating installation of cables 5 of various specifications and even mounting and fixing of a flat cable. In addition, since the projection of the wire pressing groove 331 is connected to the projection of the wire pressing portion 341, it is possible to avoid a condition the cable 5 is bent and deformed between the wire pressing portion 341 and the wire pressing groove 331.

The base according to embodiments of the present disclosure may be applied to various charging piles to at least partially solve the above problems. It should be understood that the base according to the embodiments of the present disclosure may also be applied to other electrical components, which is not limited in the embodiments of the present disclosure.

Various embodiments of the present disclosure have been described above, which are exemplary, not exhaustive, and are not limited to the embodiments disclosed. Many modifications and variations will be apparent to those of ordinary skill in the art without departing from the scope and spirit of the illustrated embodiments. The selection of the terms used herein is intended to best explain the principles of the embodiments, practical applications, or technical improvements in the marketplace, or to enable others of ordinary skill in the art to understand the embodiments disclosed herein.

## Claims

1. A charging pile base (100) adapted to be disposed on a carrier (200), **characterized by** comprising:
a bottom case (1) comprising a first groove (11) formed by recessing along a direction away from the carrier (200), a second groove (12) formed by recessing along the direction away from the carrier (200), and a sealing hole (13) located on a side of the first groove (11) away from the ground for a cable to pass through, the first groove (11) being located at an end of the bottom case (1) adjacent to the ground; and
a side case (2) surrounding a side of the bottom case (1) away from the carrier (200) and enclosing a mounting cavity (101) together with the bottom case (1), wherein the first groove (11) is communicated with the mounting cavity (101) via the sealing hole (13), and the second groove (12) extends from an end of the side case (2) away from the ground towards the first groove (11) and is communicated with the first groove (11).

2. The charging pile base (100) according to claim 1, **characterized in that** an operating hole (14) is disposed on a side of the bottom case (1) away from the carrier (200), and the operating hole (14) is communicated with the first groove (11).

3. The charging pile base (100) according to claim 1, **characterized in that** the second groove (12) is disposed at a periphery of the bottom case (1) and adjacent to the side case (2), and the first groove (11) and the second groove (12) are adjacent to two opposite sides of the side case (2), respectively.

4. The charging pile base (100) according to claim 1, **characterized in that** the charging pile base (100) further comprises a wire pressing assembly (3) located within the mounting cavity (101) and adjacent to the sealing hole (13).

5. The charging pile base (100) according to claim 4, **characterized in that** the wire pressing assembly (3) comprises a first wire pressing part (31) disposed on the bottom case (1) and a second wire pressing part (32) connected to the first wire pressing part (31), and detachable elastic parts (35) are disposed on surfaces of the first wire pressing part (31) and the second wire pressing part (32) facing each other, respectively.

6. The charging pile base (100) according to claim 5, **characterized in that** surfaces of a pair of elastic parts (35) facing each other comprise arc surfaces (351), respectively, and a pair of arc surfaces (351) are symmetrical to each other.

7. The charging pile base (100) according to claim 5, **characterized in that** the charging pile base (100) further comprises a sealing part (4) matched with the sealing hole (13) and a cable (5) passing through the sealing part (4), the sealing part (4) is provided with a wiring hole (41) matched with the cable (5), and wherein in a case that the cable (5) is pressed by the wire pressing assembly (3), an axis of the cable (5) coincides with an axis of the wiring hole (41).

8. The charging pile base (100) according to claim 5, **characterized in that** limit parts (36) are disposed on surfaces of the pair of elastic parts (35) away from each other, respectively, a first limit hole (311) is disposed on the first wire pressing part (31), a second limit hole (321) is disposed on the second wire pressing part (32), wherein one of a pair of limit parts (36) is disposed within the first limit hole (311), and the other one of the pair of limit parts (36) is disposed within the second limit hole (321).

9. The charging pile base (100) according to claim 4, **characterized in that** the wire pressing assembly (3) comprises a third wire pressing part (33) disposed on the bottom case (1) and a fourth wire pressing part (34) connected to the third wire pressing part (33) through an anti-falling bolt (37).

10. The charging pile base (100) according to claim 9, **characterized in that** the third wire pressing part (33) is recessed along a direction away from the fourth wire pressing part (34) and forms a wire pressing groove (331), the fourth wire pressing part (34) extends along a direction towards the third wire pressing part (33) and forms a wire pressing portion (341), and a projection of the wire pressing groove (331) is connected to and staggered with a projection of the wire pressing portion (341) along a direction from the third wire pressing part (33) to the fourth wire pressing part (34).
